# EUROPEAN PATENT APPLICATION

(11) **EP 1 863 224 A2**
(43) Date of publication of application: **05.12.2007**
(21) Application number: 07252107.3
(22) Date of filing: 22.05.2007
(51) Int. Cl.: H04L 12/24

(54) **Monitor control system, information processing terminal, monitor control method and program**

(30) Priority: 29.05.2006 JP 2006148778; 17.04.2007 JP 2007108515
(71) Applicant: NEC Corporation, Minato-ku Tokyo 108-8001 (JP)
(72) Inventor: Yamamoto, Katsushi, Tokyo 108-8001 (JP); Shimono, Masayuki, Tokyo 140-8620 (JP)
(74) Representative: Abnett, Richard Charles

(57) **Abstract**

One personal computer includes a combination of an SNMP manager, an SNMP mediator, an application initiating function, and a local craft terminal. The personal computer is connected via a local area network to a monitor target unit to be monitored and then logs into the target unit to conduct monitor control, operation, and setting for the target unit. It is therefore possible to provide a monitor control system, an information processing terminal, a monitor control method, and a program that are economically advantageously implemented by using a personal computer, which are easily operable without using a technical language for the operation system and particular operation capability and are easily expandable with respect to unit types of monitor target units, and that can conduct monitor control, operation, and setting for the monitor target unit at a remote place.

## Description

This application is based upon and claims the benefit of priority from Japanese patent applications No. 2006-148778 filed on May 29, 2006 and No. 2007-108515 filed on April 17, 2007, the disclosure of which is incorporated herein in its entirety by reference.

### BACKGROUND OF THE INVENTION

### Field of the Invention

The present invention pertains to a monitor control system, an information processing terminal, a monitor control method, and a program for conducting monitoring, operation, and setting for a monitor target unit to be monitored on a network using a Simple Network Management Protocol (SNMP).

### Description of the Related Art

Conventional monitor control systems standardized according to M3000, M3010, and M3020 of ITU-T Recommendations are accompanied with problems as below.

First, a monitor control system used to employ units or devices, and Operating Systems (OS) such as a workstation and UNIX (registered trademark) which are expensive and require special knowledge. The reason is: the workstation is considered more reliable than general personal computers; and alarm signals of a communication apparatus generally obey protocols such as UNIX and Q3. That is, the protocol "SNMP" is not adopted. Therefore, the monitor control system is expensive and requires technical knowledge whereby a difficult and large-scale development is needed.

Second, a local craft terminal used to be directly connected via a cable to a unit in a location where the unit is installed. The reason is that conventional units do not possess a standardized and unique address. Therefore, the local craft terminal at a remote location cannot log into the unit using, for example, an Internet Protocol (IP) address.

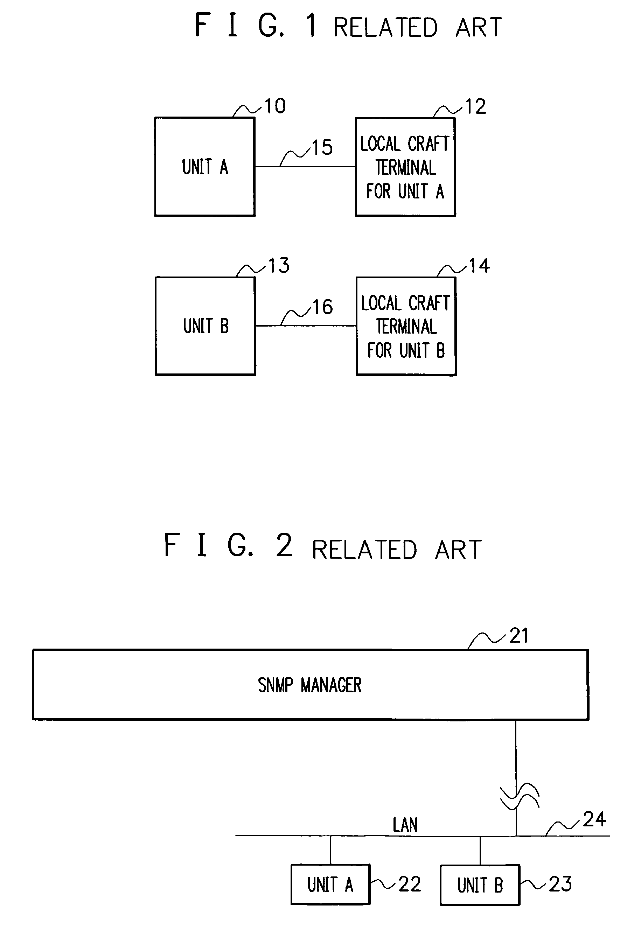

FIG. 1 shows an example of the monitor control system of this type. Unit A 10 and unit B 13, which are to be monitored, are connected respectively via cables 15 and 16 to local craft terminals 12 and 14. In this configuration, the monitor control, the operation or maintenance, and the setting of a monitor target unit can be conducted only if the monitor target unit is physically connected to a local craft terminal. However, it is impossible to log into a monitor target unit installed at a remote location.

Third, the monitor control system does not include the function to convert an alarm signal of the unit into an SNMP alarm signal. This is because manager software has not been the SNMP manager.

Fourth, if a different type of a monitor target unit is installed, it is necessary for the conventional monitor control system to add a large-sized function to its software for the following reason. The local craft terminal used to be employed as a single unit and hence is not used as one module in the monitor control system.

Fifth, the SNMP manager is adopted as a single device and can display an alarm state of the monitor target unit, but cannot conduct operations such as a control operation and an alteration of settings for the monitor target unit. This is because there does not exist a function in which the SNMP manager and the local craft terminal are installed in one personal computer and are mutually connected to each other.

FIG. 2 shows an example of such monitor control system. In the example, an SNMP manager 21 is coupled via a Local Area Network (LAN) to unit A 22 and unit B 23. In this example, only the SNMP manager 21 is used and only the alarm display is done. In the configuration, although categorized alarms can be displayed, but the monitor control, the operation, and the setting cannot be carried out for the unit. Japanese Patent Application Laid-Open Ser. No. 2004-086522 (document 1) describes a conventional example in a configuration similar to that of the system shown in FIG. 2.

### SUMMARY OF THE INVENTION

An exemplary object of the invention is to provide a monitor control system, an information processing terminal, a monitor control method, and a program that are economically advantageously implemented by using inexpensive modules such as a personal computer, an SNMP manager, and a local craft terminal not requiring high technical knowledge; that are easily operable without particular experiences and are easily expandable using additional unit types of monitor target units; and that are operable at a remote place.

In accordance with an exemplary aspect of the present invention, there is provided a monitor control system including at least one monitor target unit that is monitored, and a monitor controller that is connected via a network to the monitor target unit and controls the monitor target unit, the controller conducting monitor control, operation, and setting for the monitor target unit by use of a Simple Network Management Protocol (SNMP). The monitor controller includes an SNMP mediator that receives an alarm signal from a monitor target unit in which an alarm has occurred and converts the alarm signal into an SNMP alarm signal, an SNMP manager that receives an SNMP alarm signal from the SNMP mediator or a monitor target unit in which an alarm has occurred and displays the alarm according to the SNMP alarm signal, at least one local craft terminal, corresponding to monitor target units, that logs into monitor target units, and an application initiating module that activates, when an operation is conducted to designate a predetermined monitor target unit, a local craft terminal associated with the monitor target unit.

In accordance with another exemplary aspect the present invention, there is provided an information processing terminal employed in the monitor control system.

In accordance with another exemplary aspect of the present invention, there is provided a monitor control method of conducting monitor control, operation, and setting for at least one monitor target unit arranged on a network, by use of an SNMP. The method includes an SNMP alarm signal acquiring step of receiving an SNMP alarm signal directly from the monitor target unit or receiving an alarm signal from the monitor target unit and converting the alarm signal into an SNMP alarm signal, an alarm display step of displaying the alarm according to the SNMP alarm signal, an application initiating step of activating, when an operation is conducted to designate a predetermined monitor target unit, a local craft terminal corresponding to the monitor target unit, and a monitor target unit control step of logging into the monitor target unit by use of the local craft terminal and conducting monitor control, operation, and setting for the monitor target unit.

In accordance with another exemplary aspect of the present invention, there is provided a computer program product for conducting monitor control, operation, and setting for at least one monitor target unit arranged on a network, by use of an SNMP. At occurrence of an alarm in the monitor target unit, the program causes a computer to perform SNMP alarm signal acquiring processing for receiving an SNMP alarm signal directly from the monitor target unit or receiving an alarm signal from the monitor target unit and converting the alarm signal into an SNMP alarm signal, alarm display processing for displaying the alarm according to the SNMP alarm signal, application initiating processing for activating, when an operation is conducted to designate a predetermined monitor target unit, a local craft terminal corresponding to the monitor target unit, and monitor target unit control processing for logging into the monitor target unit by use of the local craft terminal and conducting monitor control, operation, and setting for the monitor target unit.

### BRIEF DESCRIPTION OF THE DRAWINGS

Features of the disclosed embodiments will be described by way of the following detailed description with reference to the accompanying drawings in which:
FIG. 1 is a block diagram showing an example of a configuration of cable connections in a conventional monitor control system;
FIG. 2 is a block diagram showing an example of the structure using only the SNMP manager in a conventional monitor control system;
FIG. 3 is a schematic block diagram showing a configuration of a monitor control system and a monitor controller;
FIG. 4 is a flowchart showing operation of the monitor controller;
FIG. 5 is a block diagram showing structure of a monitor control system and a monitor controller; and
FIG. 6 is a flowchart showing operation of the monitor controller.

### DESCRIPTION OF EXEMPLARY EMBODIMENTS

Referring next to the accompanying drawings, description will be given in detail of exemplary embodiments.

### [First exemplary embodiment]

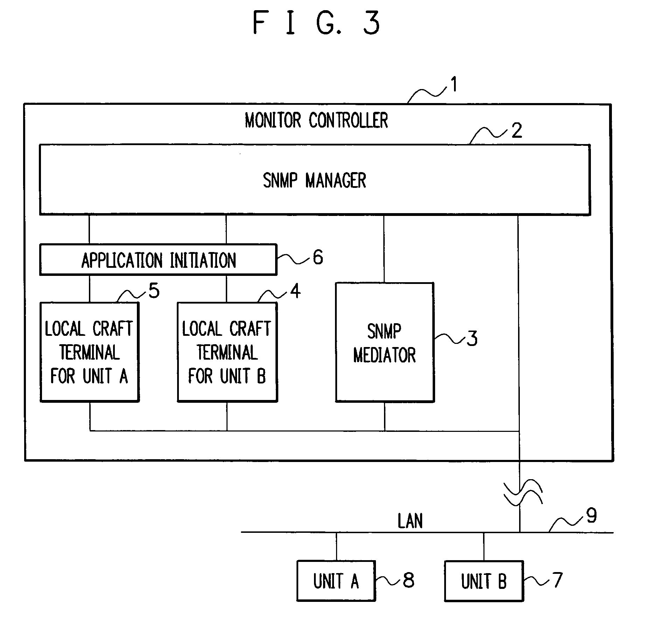

FIG. 3 shows a configuration of a monitor control system and a monitor controller.

The system includes a monitor controller 1 and a unit A 8 and a unit B 7, and a Local Area Network (LAN) 9 connecting the controller 1 and the units A and B to each other as shown in FIG. 3. The unit A 8 and the unit B 7 are installed at remote locations as monitor target units to be monitored by the controller 1.

In FIG. 3, the monitor controller (network management system) 1 is one personal computer (information processing terminal). The controller 1 includes an SNMP manager 2, an SNMP mediator 3, local craft terminals 4 and 5 used for monitor target units, and an application initiating function 6 as shown in FIG. 3. The problems mentioned above are removed through cooperative operations of the constituent components.

The SNMP manager 2 of FIG. 3 directly receives an SNMP alarm signal from a monitor target unit in which an alarm has occurred. The SNMP mediator 3 converts into a SNMP alarm signal an alarm signal sent from a monitor target unit. The manager 2 receives the SNMP alarm signal. According to the SNMP alarm signal, the manager 2 displays information items such as an alarm name and a category of the alarm on a screen of the monitor controller 1.

In the configuration of FIG. 3, the SNMP mediator 3 converts an alarm signal from a monitor target unit that cannot produce an SNMP alarm signal into an SNMP alarm signal.

The local craft terminal 4 of FIG. 3 logs into the unit B 7 arranged as a monitor target unit in a remote place and carries out the control operation, the setting change, and the like for the unit B 7. The local craft terminal is application software inherently and directly coupled with the monitor target unit to conduct operations for the target unit such as a monitor control, an operation, and the setting for the target unit. The monitor control, the operation, and the setting for the monitor target unit are not possible without a local craft terminal. Therefore, the local craft terminal is ordinarily designed together with the monitor target unit.

In FIG. 3, the local craft terminal 5 conducts a login operation for the unit A 8 as a monitor target unit in a remote place and achieves the control operation, the setting change, and the like for the unit A 8. The local craft terminal is application software that is to be directly connected to the monitor target unit to carry out operations for the target unit, for example, the monitor control, the operation, and the setting for the target unit. The monitor control, the operation, and the setting for the target unit are possible only when the local craft terminal is present. Therefore, ordinarily, the local craft terminal is designed together with the monitor target unit.

The application initiating module 6 includes a function to detect an operation conducted by the operator of the monitor controller 1 to designate an inspection target unit, i.e., a monitor target unit in which an alarm has taken place (or of which an operation state is to be examined) to resultantly activate the local craft terminal 4 or 5 of the designated target unit.

The SNMP manager 2 is well known to those skilled in the art and hence description of detailed structure thereof will be avoided.

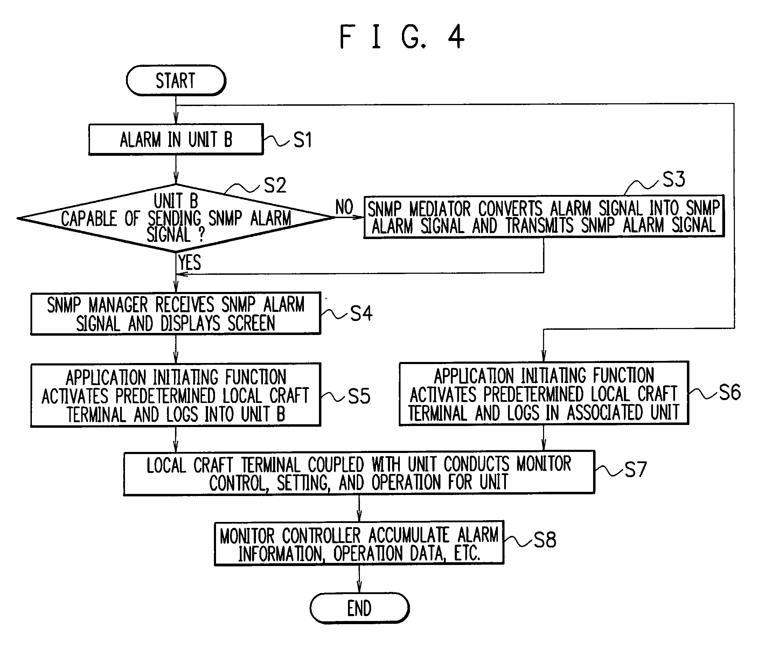

FIG. 4 shows an operation of the monitor controller in a flowchart. The controller conducts the processing (a monitor control method) under the control of a program.

In step S1 of FIG. 4, it is assumed that an alarm occurs, for example, in the unit B 7, i.e., a monitor target unit shown in FIG. 3. Each of the units A and B includes a function to automatically send an alarm signal to an external device at occurrence of an alarm. The alarm signal includes a text message indicating an alarm's name and category information indicating a categorized degree of importance of the alarm such as "major", "minor", or "warning".

In step S2, the unit B in which an alarm has occurred transmits, if possible (yes in step S2), an SNMP alarm signal via the LAN 9 to the SNMP manager 2. If the unit B cannot send the alarm signal (no in step S2), the signal is delivered to a SNMP mediator task.

In step S3, the mediator 3 receives the alarm signal and converts the signal into an SNMP alarm signal to feed the signal to the SNMP manager 2.

The SNMP alarm signal sent in step S2 or S3 is received by the manager 2 in step S4. On the basis of the received signal including a text message indicating an alarm name and category information indicating the category of the alarm, the manager 2 displays associated information on the screen of the monitor controller 1. Specifically, the manager 2 displays a text of the alarm name, an icon indicating the unit B 7, and a network diagram showing connections between the units. According to the category of the alarm, the icon of the associated unit, i.e., the unit B 7 is displayed, for example, in red for "major", pink for "minor", and yellow for "warning". In the state of step S4, the operator of the monitor controller 1 can recognize only the category and the alarm name of the alarm automatically displayed on the screen.

In step S5, to examine details of the alarm, the operator conducts an operation to specify the device, i.e., the unit B, for example, by clicking the icon of the unit B on the screen. Thereafter, the application initiating section 6 detects the operation, activates the local craft terminal 4 associated with the unit B, and then logs via the LAN 9 into the unit B using, for example, an IP address.

In step S7, by use of the local craft terminal 4 having logged into the unit B via the LAN 9, the operator of the monitor controller 1 is able to obtain alarm information indicating details of the alarm and carry out the monitor control, the operation or maintenance, and the setting change for the unit B. The operations achievable by the task such as the monitor control, the operation, and the setting change for the unit are substantially equal to those feasible at the installation site of the single-unit local craft terminal according to the conventional technique as shown in FIG. 1. That is, operation items are not restricted and hence the operations allowed according to the specifications of the device are available.

In step 8, the alarm information, data associated with operation of the monitor controller, and data related to the operator of the controller are accumulated in a storage module of the monitor controller 1.

In a situation other than the inspection at occurrence of an alarm, for example, in a situation where it is required for the operator of the monitor controller 1 to carry out the monitor control, the operation, or the setting change for the monitor target unit, if the operator designates a predetermined monitor target unit in step S6 of FIG. 4, the application initiating module 6 activates the local craft terminal of the designated target unit. As a result, by use of the craft terminal, it is possible to log into the unit via the LAN 9 using an IP address or the like.

The embodiment described above includes local craft terminals for various types of monitor target units. Therefore, the monitor control, the operation, and the setting can be conducted for the monitor target units of various types. By increasing the types of local craft terminals, the types of monitor target units can be increased.

Additionally, since the embodiment also includes the SNMP mediator, the monitor control can be carried out for monitor target units that cannot transmit the SNMP alarm signal.

According to the embodiment, there can be obtained advantages as below.

First, an alarm of a monitor target unit at a remote location can be automatically displayed. The reason is that with the SNMP manager, the monitor control system is connected via a LAN to the monitor target unit.

Second, even if the monitor target unit cannot send an SNMP alarm signal, an alarm of the unit can be monitored. The SNMP mediator converts an alarm signal from the target unit into an SNMP alarm signal and sends the signal to the SNMP manager.

Third, it is possible to log into the monitor target unit at a remote place. The application initiating function activates the associated local craft terminal. It is therefore possible to log into the target unit via a LAN by use of an IP address or the like of the unit.

Fourth, the operations required for the monitor target unit such as the monitor control, the operation, and the setting can be carried out at a remote place. By using the local craft terminal for the target unit, it is possible to log into the target unit via a LAN.

### [Second exemplary embodiment]

In the first embodiment, if it is required that a monitor target unit continuously occupy a particular software port of the SNMP manager for a predetermined period of time to conduct, for example, the monitor control setting operation, the monitor controller allows the unit to occupy the software port. During the period of time in which the unit is allowed to occupy the software port, the controller successively receives SNMP traps from another monitor target unit. However, while a particular software port is being occupied, the SNMP manager cannot receive an SNMP trap sent from another monitor target unit to the software port thus occupied. This consequently leads to a problem that the information of the SNMP manager is not successively updated to the latest information.

To cope with the problem, the monitor controller of the second embodiment includes an SNMP software port conversion function. Thanks to the function that executes SNMP software port conversion processing, during the period of time in which a monitor target unit occupies a particular software port and the port cannot receive a signal, an SNMP trap sent from another monitor target unit to the software port is delivered to be received by the SNMP manager by use of an empty port that can receive a signal. Resultantly, it is guaranteed that the information possessed by the SNMP manager is continuously updated by the latest SNMP trap in any situation.

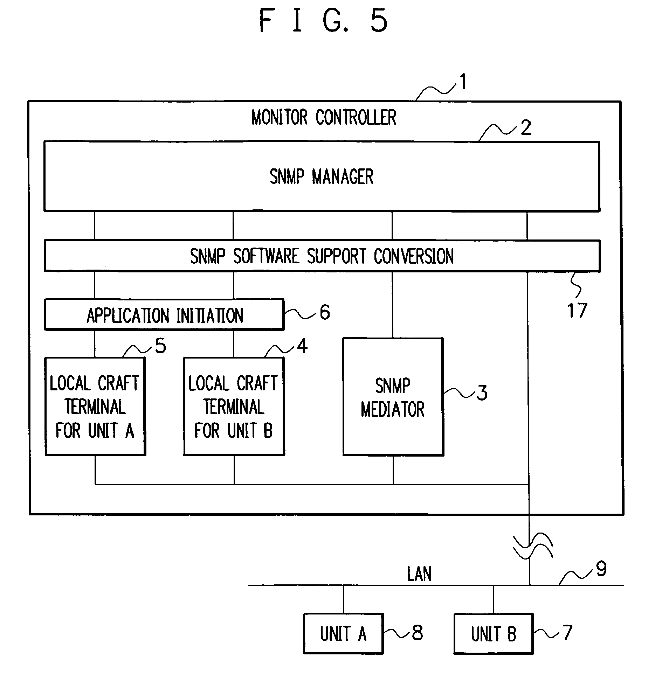

FIG. 5 shows structure of a monitor control system and a monitor controller. In FIG. 5, the same constituent components as those of FIG. 3 are assigned with the same reference numerals, and description thereof will be avoided.

In FIG. 5, if a monitor target unit occupies a particular software port of the SNMP manager continuously for a predetermined period of time, for example, to conduct the monitor control setting operation, the SNMP software port conversion module 17 makes it possible to continuously receive an SNMP trap from another monitor target unit even while the particular software port is being occupied. That is, the module transfers the SNMP trap, which is addressed to the software port being occupied as above, to the SNMP manager via an empty port.

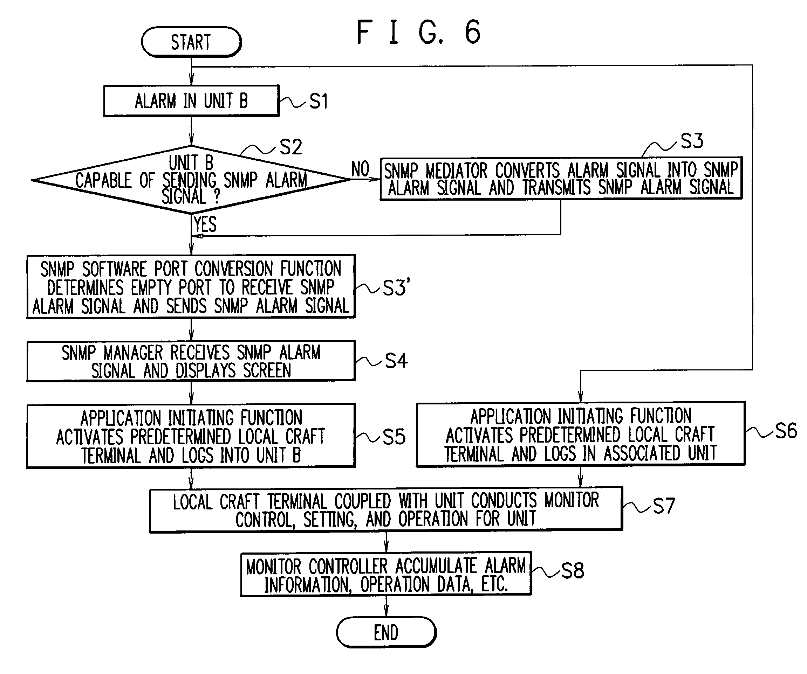

FIG. 6 shows operation of the monitor controller of the second embodiment. The controller carries out processing (of a monitor control method) under the control of a program.

Assume in step S1 of FIG. 6 that an alarm occurs in, for example, unit B 7 as a monitor target unit shown in FIG. 5. Each of the units A and B includes a function to automatically deliver an alarm signal to an external device at occurrence of an alarm. The alarm signal includes a text message indicating the alarm name and category information indicating importance of the alarm, for example, "major", "minor", or "warning".

In step S2 of FIG. 6, if the unit B 7 in which the alarm has occurred can deliver an SNMP alarm signal (yes in step S2), the signal is sent via the LAN 9 to the conversion module 17. If the unit B 7 cannot transmit the SNMP alarm signal (no in step S2), an alarm signal is fed to a SNMP mediator task.

In step S3, when the alarm signal from the unit B 7 is received, the SNMP mediator 3 converts the signal into an SNMP alarm signal to send the alarm signal to the conversion module 17.

In step S3' of FIG. 6, the conversion module 17 determines whether the destination of the SNMP alarm signal is a software port of the SNMP manager 2 in a signal receivable state. If the software port is in a signal receivable state, the SNMP alarm signal is delivered thereto. If the software port is occupied by another unit and is in a signal unreceivable state, the conversion function 17 selects an empty port capable of receiving the SNMP alarm signal and transmits the signal to the SNMP manager 2 by using the empty port.

The processing flow after step S4 is substantially equal to that described for the first embodiment by referring to FIG. 4, and hence description thereof will be omitted.

In accordance with the second embodiment, advantageous aspects are as follows.

The monitor controller can continuously display the latest alarm information of the monitor target unit in any case for the following reason. Due to the SNMP software port conversion function, the monitor controller can successively receive the latest alarm information of the monitor target unit. In this way, the monitor controller can display the latest alarm information in any situation.

### [Third exemplary embodiment]

In the monitor control system, the monitor target unit may send the SNMP alarm signal directly to the SNMP manager if the unit includes a function to transmit the SNMP alarm signal. Otherwise the monitor target unit may send the alarm signal to the SNMP mediator.

### [Fourth exemplary embodiment]

In the monitor control system, the SNMP alarm signal may include a category and a name of the alarm having occurred in the monitor target unit, and the SNMP manager may display, at reception of the SNMP alarm signal, the category and the name of the alarm according to the SNMP alarm signal.

### [Fifth exemplary embodiment]

In the monitor control system, the SNMP manager may display a network diagram indicating a relation of connections between units on the network and an icon in the diagram to indicate the monitor target unit in which the alarm has occurred, the icon being displayed in colors corresponding to the category of the alarm.

### [Sixth exemplary embodiment]

The monitor control system may further include an SNMP software port conversion module that relays an SNMP alarm signal transmitted to the SNMP manager, determines, if a software port as a destination of the SNMP alarm signal is occupied by another monitor target unit and hence cannot receive the SNMP alarm signal, an empty port capable of receiving the SNMP alarm signal, and transmits the SNMP alarm signal via the empty port to the SNMP manager.

### [Seventh exemplary embodiment]

In the monitor control method, the SNMP alarm signal may include a category and a name of the alarm having occurred in the monitor target unit. The alarm display step may include displaying the category and the name of the alarm having occurred in the monitor target unit, according to the SNMP alarm signal.

### [Eighth exemplary embodiment]

In the monitor control method, the alarm display step may include displaying a network diagram indicating a relation of connections between units arranged on the network and an icon in the diagram to indicate the monitor target unit in which the alarm has occurred, the icon being displayed in colors corresponding to the category of the alarm.

### [Ninth exemplary embodiment]

The monitor control method may further include an SNMP software port conversion step of relaying an SNMP alarm signal transmitted to the SNMP manager, determining, if a software port as a destination of the SNMP alarm signal is occupied by a second monitor target unit and hence cannot receive the SNMP alarm signal, an empty port capable of receiving the SNMP alarm signal, and transmitting the SNMP alarm signal via the empty port to the SNMP manager.

### [Tenth exemplary embodiment]

According to a computer program product, the SNMP alarm signal may include a category and a name of the alarm having occurred in the monitor target unit and the program causes a computer to perform, as the alarm display processing, processing to display the category and the name of the alarm having occurred in the monitor target unit, according to the SNMP alarm signal.

### [Eleventh exemplary embodiment]

The program may cause a computer to perform processing to display a network diagram indicating a relation of connections between units on the network and an icon in the diagram to indicate the monitor target unit in which the alarm has occurred, the icon being displayed in a color changed according to the category of the alarm.

### [Twelfth exemplary embodiment]

The program may cause a computer to perform SNMP software port conversion processing for relaying an SNMP alarm signal transmitted to the SNMP manager, determining, if a software port as a destination of the SNMP alarm signal is occupied by another monitor target unit and hence cannot receive the SNMP alarm signal, an empty port capable of receiving the SNMP alarm signal, and transmitting the SNMP alarm signal via the empty port to the SNMP manager.

The present invention is applicable to the control operation to monitor, to operate, and to install a monitor target unit at a remote place.

An exemplary advantage according to the invention is that it is possible to implement a monitor control system, an information processing terminal, a monitor control method, and a program that are economically advantageously implemented and are easily operable without particular experiences and which are easily expandable using additional unit types of monitor target units and are operable at a remote place.

While the present invention has been described with reference to the particular illustrative embodiment, it is not to be restricted by those embodiments but only by the appended claims. It is to be appreciated that those skilled in the art can change or modify the embodiment without departing from the scope and spirit of the present invention.

## Claims

1. A monitor control system, comprising:
at least one monitor target unit that is monitored; and
a monitor controller that is connected via a network to a monitor target unit and controls the monitor target unit, the controller conducting monitor control, operation, and setting for the monitor target unit by use of a Simple Network Management Protocol (SNMP), wherein the monitor controller comprises:
an SNMP mediator that receives an alarm signal from a monitor target unit in which an alarm has occurred and converts the alarm signal into an SNMP alarm signal;
an SNMP manager that receives an SNMP alarm signal from the SNMP mediator or a monitor target unit in which an alarm has occurred and displays the alarm according to the SNMP alarm signal;
at least one local craft terminal, corresponding to monitor target units, that logs into monitor target units and
an application initiating module that activates, when an operation is conducted to designate a predetermined monitor target unit, a local craft terminal associated with the monitor target unit.

2. The monitor control system in accordance with claim 1, wherein:
the monitor target unit sends the SNMP alarm signal directly to the SNMP manager if the unit includes a function to transmit the SNMP alarm signal,; and
the monitor target unit sends the alarm signal to the SNMP mediator if the unit does not include a function to transmit the SNMP alarm signal,.

3. The monitor control system in accordance with claim 1 or 2, wherein:
the SNMP alarm signal includes a category and a name of the alarm having occurred in the monitor target unit; and
the SNMP manager displays, upon reception of the SNMP alarm signal, the category and the name of the alarm according to the SNMP alarm signal.

4. The monitor control system in accordance with any one of claims 1 to 3, wherein the SNMP manager displays a network diagram indicating a relation of connections between units on the network and an icon in the diagram to indicate the monitor target unit in which the alarm has occurred, the icon being displayed in colors corresponding to the category of the alarm.

5. The monitor control system in accordance with any one of claims 1 to 4, further comprising an SNMP software port conversion module that relays an SNMP alarm signal transmitted to the SNMP manager, determines, if a software port as a destination of the SNMP alarm signal is occupied by another monitor target unit and hence cannot receive the SNMP alarm signal, an empty port capable of receiving the SNMP alarm signal, and transmits the SNMP alarm signal via the empty port to the SNMP manager.

6. An information processing terminal employed as a monitor controller in a monitor control system in accordance with one of claims 1 to 5.

7. A monitor control method of conducting by use of an SNMP monitor control, operation, and setting for at least one monitor target unit arranged on a network, the method comprising:
an SNMP alarm signal acquiring step of receiving an SNMP alarm signal directly from a monitor target unit that issued an alarm or receiving an alarm signal from the monitor target unit, and converting the alarm signal into an SNMP alarm signal;
an alarm display step of displaying the alarm according to the SNMP alarm signal;
an application initiating step of activating, when an operation is conducted to designate a predetermined monitor target unit, a local craft terminal corresponding to the monitor target unit; and
a monitor target unit control step of logging into the monitor target unit by use of the local craft terminal and conducting monitor control, operation, and setting for the monitor target unit.

8. The monitor control method in accordance with claim 7, wherein:
the SNMP alarm signal includes a category and a name of the alarm; and
the alarm display step comprises displaying the category and the name of the alarm according to the SNMP alarm signal.

9. The monitor control method in accordance with claim 7 or 8, wherein the alarm display step comprising displaying a network diagram indicating a relation of connections between units arrange on the network and an icon in the diagram to indicate the monitor target unit in which the alarm has occurred, the icon being displayed in colors corresponding to the category of the alarm.

10. The monitor control method in accordance with any one of claims 7 to 9, further comprising an SNMP software port conversion step of relaying an SNMP alarm signal transmitted to the SNMP manager, determining, if a software port as a destination of the SNMP alarm signal is occupied by another monitor target unit and hence cannot receive the SNMP alarm signal, an empty port capable of receiving the SNMP alarm signal, and transmitting the SNMP alarm signal via the empty port to the SNMP manager.

11. A computer program product for conducting by use of an SNMP monitor control, operation, and setting for at least one monitor target unit arranged on a network, the program causing a computer to perform:
SNMP alarm signal acquiring processing for receiving an SNMP alarm signal directly from a monitor target unit that issued an alarm or receiving an alarm signal from the monitor target unit, and converting the alarm signal into an SNMP alarm signal;
alarm display processing for displaying the alarm according to the SNMP alarm signal;
application initiating processing for activating, when an operation is conducted to designate a predetermined monitor target unit, a local craft terminal corresponding to the monitor target unit; and
monitor target unit control processing for logging into the monitor target unit by use of the local craft terminal and conducting monitor control, operation, and setting for the monitor target unit.

12. The computer program product in accordance with claim 11, wherein the SNMP alarm signal includes a category and a name of the alarm,
and the program further causing a computer to perform processing of displaying the category and the name of the alarm according to the SNMP alarm signal.

13. The computer program product in accordance with claim 11 or 12, the program causing a computer to perform processing of displaying a network diagram indicating a relation of connections between units on the network and an icon in the diagram to indicate the monitor target unit in which the alarm has occurred, the icon being displayed in colors corresponding to the category of the alarm.

14. The computer program product in accordance with any one of claims 11 to 13, the program causing a computer to perform SNMP software port conversion processing for relaying an SNMP alarm signal transmitted to the SNMP manager, determining, if a software port as a destination of the SNMP alarm signal is occupied by another monitor target unit and hence cannot receive the SNMP alarm signal, an empty port capable of receiving the SNMP alarm signal, and transmitting the SNMP alarm signal via the empty port to the SNMP manager.
